# EUROPEAN PATENT SPECIFICATION

(11) **EP 4 043 181 B1**
(45) Date of publication and mention of the grant of the patent: **03.04.2024**
(21) Application number: 20874621.4
(22) Date of filing: 24.09.2020
(51) Int. Cl.: B29C 49/56, B29C 49/42, B29C 49/48, B29L 31/00

(54) **FULL-CONNECTING-ROD TYPE COMBINED CONNECTING ROD MECHANISM FOR LINKAGE BETWEEN OPENING AND CLOSING MOLD AND BOTTOM MOLD OF BOTTLE BLOWING MACHINE**
VOLLPLEUELMECHANISMUS FÜR DIE VERBINDUNG ZWISCHEN ÖFFNUNGS- UND SCHLIESSFORM UND BODENFORM EINER FLASCHENBLASMASCHINE
MÉCANISME DE BIELLE COMBINÉ DE TYPE À BIELLE PLEINE POUR LIAISON ENTRE UN MOULE OUVRANT ET FERMANT ET UN MOULE INFÉRIEUR D'UNE MACHINE DE SOUFFLAGE DE BOUTEILLES

(30) Priority: 09.10.2019 CN 201910953547; 16.03.2020 CN 202010180181
(43) Date of publication of application: 17.08.2022
(73) Proprietor: Jiangsu Newamstar Packaging Machinery Co., Ltd, Suzhou, Jiangsu 215618 (CN)
(72) Inventor: FENG, Zhihua, Suzhou, Jiangsu 215618 (CN); LIU, Dingding, Suzhou, Jiangsu 215618 (CN); DONG, Tengzhong, Suzhou, Jiangsu 215618 (CN); ZHANG, Xiaofei, Suzhou, Jiangsu 215618 (CN); WU, Shupeng, Suzhou, Jiangsu 215618 (CN)
(74) Representative: Fidal Innovation
(86) International application number: PCT/CN2020/117283
(87) International publication number: WO 2021/068749

(56) References cited:
- WO-A2-2018/178774
- CN-A- 102 862 285
- CN-A- 107 932 878
- CN-A- 110 757 766
- CN-A- 111 319 242
- CN-U- 209 063 527
- US-A1- 2010 203 185
- US-B1- 6 929 462
- US-B1- 9 050 749

## Description

### FIELD OF THE INVENTION

The present disclosure relates to the field of the bottle blowing machine, in particular to combined linkage mechanism with full-connecting-rod type for synchronous motion between an opening and closing mold and a bottom mold of a bottle blowing machine.

### BACKGROUND OF THE INVENTION

Bottle blowing machine is the key equipment for producing various plastic bottles for liquid packaging. During production, the preforms processed by the heating process are sent by the preform delivery mechanism of the blow molding machine to the mold cavity that conforms to the needed shape of the plastic bottles. After stretching, blowing, pressing, cooling and other processes, the plastic bottles to be processed are finally formed and taken away by the bottle taking mechanism and sent to the next process. Each process of the bottle blowing machine has strict requirements and high requirements for mutual cooperation, in particular, there are strict requirements for the synchronous control of the opening and closing movement of the opening and closing mold and the up-and-down motion of the bottom mold.

Technological background documents in prior art are provided, such as US 2010/203185A1, which relates to the field of devices for blow molding containers, US6929462B1, which discloses to a mold part guide mechanism, WO2018/178774A2, which discloses a device for the production of plastic containers, and CN209063527U, which discloses a connecting rod mechanism for linkage of bottle blowing machine die frame.

The existing mechanisms for realizing the synchronous movement of the bottom mold and the opening and closing mold mainly include two types: one is a cylindrical spatial cam mechanism, refer to CN113134961A; the other is a composite mechanism formed by a spatial four-bar linkage mechanism and a planar cam mechanism, refer to US20100203185A1.

The preamble of claim 1 is based on an internal prior art.

The advantages of the first type of mechanisms: simple mechanism and few moving parts. Disadvantages of the first type of mechanisms:
1) The design and machining accuracy requirements of the cam flange or groove profile of the cylindrical spatial cam are high, and the installation and positioning of the cam is difficult, and the roller is easy to jam; 2) the contact zone between the roller and the cam profile is easy to form point contact, the pressure stress is high, and the roller is easy to damage or the surface of the cam profile wears easily; 3) limited by the size of the space, the cam pressure angle is usually relatively large, similarly, the roller is easy to damage or the surface of the cam profile wears easily.

The advantages of the second type of mechanisms: the design, manufacture and installation of the spatial four-bar linkage mechanisms and the planar cam mechanisms are simpler than that of the first one aforementioned. Disadvantages of the second type of mechanisms: limited by the size of the space, the cam pressure angle is usually large, the roller is easy to damage or the surface of the cam profile wears easily, and at the time, the dynamic load in the rod connected to the spatial four-bar linkage is relatively large, especially when compressed, the connecting rod is easy to become unstable, which directly affects the high-speed performance of the blow molding machine.

### SUMMARY OF THE INVENTION

The present disclosure is aimed to provided a combined linkage mechanism with full-connecting-rod type for synchronous motion between an opening and closing mold and a bottom mold of a bottle blowing machine, which is simple, has a low dynamic load, and can effectively reduce the vibration and shock of the mechanism and reduce attrition among parts, enhance the stability and reliability of the blow blowing machine, and improve the high-speed behaviors of the machine.

To solve the technical problems aforementioned, the technical solutions employed by the present disclosure are given below:
A combined linkage mechanism with full-connecting-rod type for synchronous motion between an opening and closing mold and a bottom mold of a bottle blowing machine, comprising a left mold base, a right mold base, an oscillating arm of the opening and closing mold, a left coupler of the opening and closing mold, and a right coupler of the opening and closing mold, a bottom mold, a guide rail of the bottom mold, a mold base holder, a bottom mold holder, a cam roller of the opening and closing mold, a roller arm of the opening and closing mold, an oscillating shaft of the opening and closing mold, an auxiliary rotating arm, a spatial coupler, an oscillating rod of the bottom mold, a crank of the bottom mold and a pull rod of the bottom mold; wherein the cam roller of the opening and closing mold is configured to be rotatably arranged on the roller arm of the opening and closing mold around its own axis, and to drive the roller arm of the opening and closing mold to swing under the drive of a cam of the opening and closing mold, the roller arm of the opening and closing mold and the oscillating arm of the opening and closing mold are both fixedly connected to the oscillating shaft of the opening and closing mold that is rotatably arranged on the mold base holder around its own axis, and two ends of the left coupler of the opening and closing mold / right coupler of the opening and closing mold are configured to be respectively connected with the oscillating arm of the opening and closing mold and pin-jointed to the left mold base/ right mold base that could be pin-jointed to and rotated around the mold base holder, and to drive the left mold base and the right mold base to make an opening and closing movement when the roller arm of the opening and closing mold oscillates;
wherein the auxiliary rotating arm is configured to be fixedly connected to the roller arm of the opening and closing mold or the left mold base or the right mold base, two ends of the spatial coupler is configured to be respectively jointed to the auxiliary rotating arm and the oscillating rod of the bottom mold through a spherical surface of a joint bearing fixedly connected thereto, the bottom mold holder is configured to be fixed on the mold base holder, the oscillating rod of the bottom mold is configured to be rotatable around an axis on the bottom mold holder, one end of the crank of the bottom mold is configured to be fixedly connected to the oscillating rod of the bottom mold and the other end being pin-jointed to the pull rod of the bottom mold, the pull rod of the bottom mold is configured to be pin-jointed to the bottom mold, and the bottom mold is configured to be slidable on the guide rail of the bottom mold fixedly connected to the bottom mold holder, and to drive the bottom mold to make an up-and-down motion when the roller arm of the opening and closing mold oscillates;
a linkage mechanism formed by the roller arm of the opening and closing mold or the left mold base or the right mold base and the auxiliary rotating arm fixedly connected thereto, the mold base holder and the bottom mold holder fixedly connected thereto, the spatial coupler, and the oscillating rod of the bottom mold is a spatial four-bar linkage mechanism; in the spatial four-bar linkage mechanism, a movement plane of the roller arm of the opening and closing mold or the left mold base or the right mold base and the auxiliary rotating arm fixedly connected thereto and a movement plane of the oscillating rod of the bottom mold are perpendicular to each other;
a linkage mechanism formed by the crank of the bottom mold, the pull rod of the bottom mold, the bottom mold, the bottom mold holder and the guide rail of the bottom mold fixedly connected thereto is a planar crank-slider mechanism;
the series connection of the spatial four-bar linkage mechanism and the planar crank-slider mechanism form a series combined connecting-rod type of bottom mold elevator mechanism;
a linkage mechanism formed by the left mold base, the left coupler of the opening and closing mold, the oscillating arm of the opening and closing mold and the roller arm of the opening and closing mold fixedly connected to the oscillating shaft of the opening and closing mold, and the mold base holder is a first pin-jointed four-bar linkage mechanism;
a linkage mechanism formed by the right mold base, the right coupler of the opening and closing mold, the oscillating arm of the opening and closing mold and the roller arm of the opening and closing mold fixedly connected to the oscillating shaft of the opening and closing mold, and the mold base holder is a second pin-jointed four-bar linkage mechanism;
a combination of the series combined connecting-rod type of bottom mold elevator mechanism, the first pin-jointed four-bar linkage mechanism, and the second pin-jointed four-bar linkage mechanism forms a combined linkage mechanism with full-connecting-rod type for synchronous motion between the opening and closing mold and the bottom mold of the bottle blowing machine.

Further,
in an early opening stage of the molds, the angle between the oscillating rod of the bottom mold and the spatial coupler is an acute angle, and the angle between the auxiliary rotating arm and the spatial coupler is an obtuse angle; in a later opening stage of the molds, the angle between the oscillating rod of the bottom mold and the spatial coupler becomes an obtuse angle, and the angle between the auxiliary rotating arm and the spatial coupler becomes an acute angle;
in an early closing stage of the molds, the angle between the oscillating rod of the bottom mold and the spatial coupler is an obtuse angle, and the angle between the auxiliary rotating arm and the spatial coupler is an acute angle; in a later closing stage of the molds, the angle between the oscillating rod of the bottom mold and the spatial coupler becomes an acute angle, and the angle between the auxiliary rotating arm and the spatial coupler becomes an obtuse angle;
when the bottom mold is located at the starting point of an upper end, the crank of the bottom mold and the pull rod of the bottom mold form an approximate linear form with an angle between 170° - 180°.

Further, in the bottom mold and the left mold base/right mold base, one is machined with a wedge-shaped ring groove, and the other is machined with a wedge-shaped snap ring for clamping into the wedge-shaped ring groove;
the series combined connecting-rod type of bottom mold elevator mechanism has a high sensitivity state and a low sensitivity state;
in the early opening stage of the molds, the series combined connecting-rod type of bottom mold elevator mechanism is in the low sensitivity state, the roller arm of the opening and closing mold drives the left mold base and the right mold base to gradually open, and before the wedge-shaped ring groove is completely separated from the wedge-shaped snap ring, the series combined connecting-rod type of bottom mold elevator mechanism controls the displacement of the bottom mold to be smaller than the gap between the wedge-shaped snap ring and the wedge-shaped ring groove, to form an approximate dwell for the bottom mold;
in the later closing stage of the molds, the series combined connecting-rod type of bottom mold elevator mechanism is in the low sensitivity state, the roller arm of the opening and closing mold drives the left mold base and the right mold base to gradually close, until the wedge-shaped snap ring enters into and is completely aligned with the wedge-shaped ring groove, and the series combined connecting-rod type of bottom mold elevator mechanism controls the displacement of the bottom mold to be smaller than the gap between the wedge-shaped snap ring and the wedge-shaped ring groove, to form an approximate dwell for the bottom mold;
in a middle opening stage of the molds, the series combined connecting-rod type of bottom mold elevator mechanism is in the high sensitivity state to control the drop of the bottom mold by a larger displacement;
in the middle closing stage of the molds, the series combined connecting-rod type of bottom mold elevator mechanism is in the high sensitivity state to control the rising of the bottom mold by a larger displacement.

Further,
during mold opening, the series combined connecting-rod type of bottom mold elevator mechanism controls the movement of the bottom mold and the movement of a bottle taken by a bottle taking mechanism without geometric interference;
during mold closing, the series combined connecting-rod type of bottom mold elevator mechanism controls the movement of the bottom mold and the movement of a preform delivered by a preform delivery mechanism without geometric interference.

Further, the angle of the oscillating rod of the bottom mold and the crank of the bottom mold is α, where 0° ≤ α ≤ 180°.

Due to the application of the above technical solutions, the present disclosure has the following advantages over the prior art:
The combined linkage mechanism with full-connecting-rod type for synchronous motion between an opening and closing mold and a bottom mold of a bottle blowing machine of the present disclosure comprises a combination of a series connection of a type of spatial four-bar linkage mechanism and a type of planar crank-slider mechanism and two groups of planar four-bar linkage mechanisms, and the whole mechanism is a low pair mechanism. That is, the movement of the bottom mold on the guide rail of the bottom mold constitutes a sliding pair, and the connections of other components are pin- or sphere- jionted ones, which are rotating pairs or spherical pairs, therefore, the combined linkage mechanism with full-connecting-rod type usually has the advantages of simple structure, easy manufacture, reliable work, strong load bearing capacity, and large power transmission, etc. that the low pair mechanism usually has.

### BRIEF DESCRIPTION OF THE DRAWINGS

Figure 1 is a schematic diagram I of the structure of the device of the present disclosure;
Figure 2 is a schematic diagram II of the structure of the device of the present disclosure;
Figure 3 is a schematic diagram of changes in the vertical displacement of the bottom mold and the opening and closing angles of the opening and closing mold with the oscillating of the roller arm on the opening and closing mold;

Wherein, 1. left mold base; 2. right mold base; 3. oscillating arm of an opening and closing mold; 4. right coupler of an opening and closing mold; 5. bottom mold; 6. guide rail of a bottom mold; 7. mold base holder; 8. bottom mold holder; 9. cam roller of an opening and closing mold; 10. roller arm of an opening and closing mold; 11. oscillating shaft of an opening and closing mold; 12. auxiliary rotating arm; 13. spatial coupler; 14. oscillating rod of a bottom mold; 15. crank of a bottom mold; 16. pull rod of a bottom mold; 17. first shaft; 18. left coupler of an opening and closing mold.

### DETAILED DESCRIPTION

In the following, the technical solution of the present disclosure is further described combining with the accompanying drawings.
The preamble of claim 1 is based on an internal prior art.

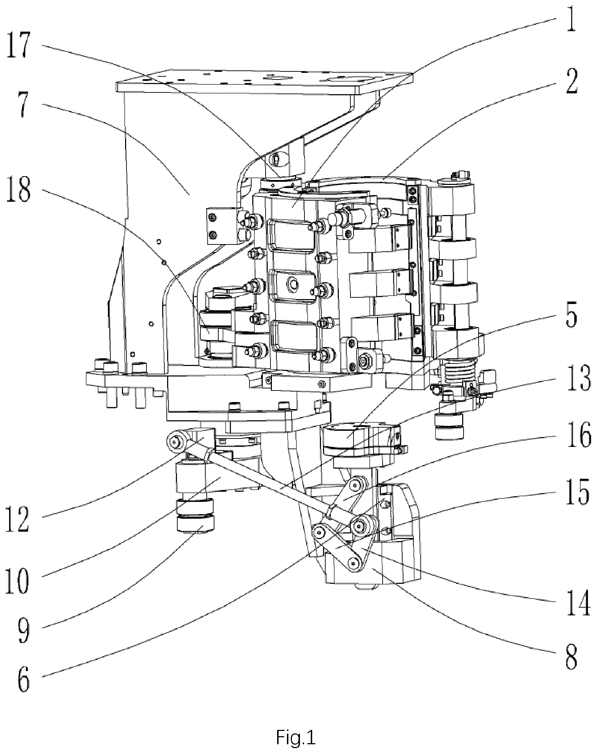

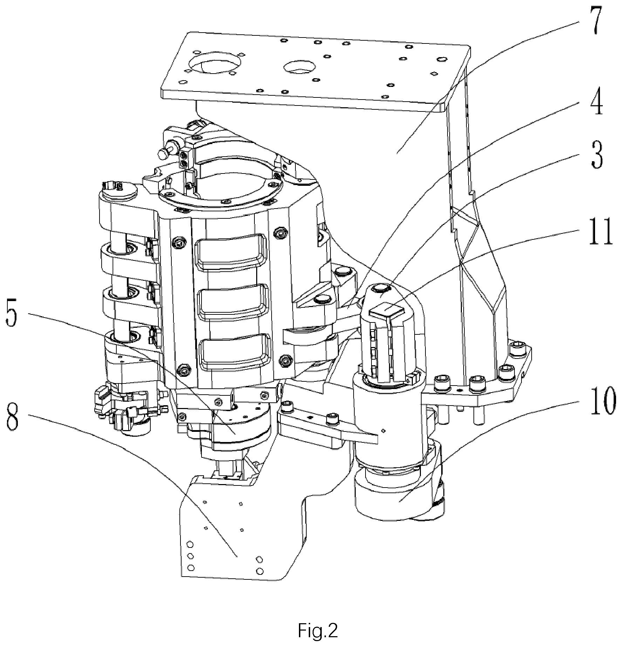

Refer to Figures 1 - 2, a combined linkage mechanism with full-connecting-rod type for synchronous motion between an opening and closing mold and a bottom mold of a bottle blowing machine mentioned above comprises a left mold base 1, a right mold base 2, an oscillating arm 3 of an opening and closing mold, a left coupler 18 of an opening and closing mold, a right coupler 4 of an opening and closing mold, a bottom mold 5, a guide rail 6 of a bottom mold, a mold base holder 7, a bottom mold holder 8, a cam roller 9 of an opening and closing mold, a roller arm 10 of an opening and closing mold, an oscillating shaft 11 of an opening and closing mold, an auxiliary rotating arm 12, a spatial coupler 13, an oscillating rod 14 of a bottom mold, a crank 15 of a bottom mold, and a pull rod 16 of a bottom mold. The left mold base 1 and the right mold base 2 are both rotatably arranged on the mold base holder 7 around a first shaft 17 for opening and closing molds in cooperation with each other.

Between the bottom mold 5 and the left mold base 1/ the right mold base 2, one is machined with a wedge-shaped ring groove, and the other is machined with a wedge-shaped snap ring for clamping into the wedge-shaped ring groove. Here, the bottom mold 5 is regarded as the one as a single, and the left mold base 1 and the right mold base 2 are regarded as the other as a whole.

The cam roller 9 of an opening and closing mold is rotatably arranged on the roller arm 10 of the opening and closing mold around its own axis; in this embodiment, the axis line direction of the cam roller 9 of the opening and closing mold is parallel to the first shaft 17, and they both extend along a vertical direction. Driven by a cam of the opening and closing mold, the cam roller 9 of the opening and closing mold is to drive the roller arm 10 of the opening and closing mold to oscillate. The roller arm 10 of the opening and closing mold and the oscillating arm 3 of the opening and closing mold are both fixedly connected to the oscillating shaft 11 of the opening and closing mold, wherein the oscillating shaft 11 is rotatably arranged on the mold base holder 7 around its own axis; in this embodiment, the axis line direction of the oscillating shaft 11 of the opening and closing mold is parallel to the first shaft 17, and they both extend along a vertical direction. The two ends of the left coupler 18 of the opening and closing mold are respectively jointed to the oscillating arm 3 of the opening and closing mold and the cylinder of the left mold base 1 that are pin-jointed to and rotatable around the mold base holder 7, and the two ends of the right coupler 4 of the opening and closing mold are respectively jointed to the oscillating arm 3 of the opening and closing mold and the cylinder of the right mold base 2 that are pin-jointed to and rotatable around the mold base holder 7. The roller arm 10 of the opening and closing mold drives the left mold base 1 and the right mold base 2 to make an opening and closing movement when the roller arm 10 of the opening and closing mold oscillates (i.e., oscillating around the axis of the oscillating shaft 11 of the opening and closing mold).

In this embodiment, when the oscillating shaft 11 of the opening and closing mold oscillates in the forward direction (the oscillating arm 3 of the opening and closing mold rotates close to the left mold base 1 and the right mold base 2), the left coupler 18 of the opening and closing mold and the right coupler 4 of the opening and closing mold are open relative to each other, thereby the left mold base 1 and the right mold base 2 are driven to close to each other to close mold; when the oscillating shaft 11 of the opening and closing mold oscillates in the opposite direction (the oscillating arm 3 of the opening and closing mold rotates away from the left mold base 1 and the right mold base 2), the left coupler 18 of the opening and closing mold and the right coupler 4 of the opening and closing mold are relatively close to each other, thereby the left mold base 1 and the right mold base 2 are driven to open with respect to each other to open the mold.

The auxiliary rotating arm 12 is fixedly connected to the roller arm 10 of the opening and closing mold or the left mold base 1 or the right mold base 2, the two ends of the spatial coupler 13 are respectively sphere-jointed to the auxiliary rotating arm 12 and the oscillating rod 14 of the bottom mold through joint bearings, and the two ends of the spatial coupler 13 are respectively fixedly connected with the two joint bearings. The bottom mold holder 8 is fixed on the mold base holder 7, the oscillating rod 14 of the bottom mold can rotate around the bottom mold holder 8, the crank 15 of the bottom mold is fixedly connected to the oscillating rod 14 of the bottom mold at one end thereof and is pin-jointed to the pull rod 16 of the bottom mold at the other end, and the pull rod 16 of the bottom mold is pin-jointed to the bottom mold 5. The bottom mold 5 can slide up and down on the guide rail 6 of the bottom mold fixedly connected to the bottom mold holder 8. The roller arm 10 of the opening and closing mold drives the bottom mold 5 to make an up-and-down motion when the roller arm 10 of the opening and closing mold oscillates (i.e., oscillating around the axis of the oscillating shaft 11 of the opening and closing mold). The angle of the oscillating rod 14 of the bottom mold and the crank 15 of the bottom mold is α, where 0° ≤ α ≤ 180°.

In this embodiment, the left end of the spatial coupler 13 is sphere-jointed to the auxiliary rotating arm 12 through a joint bearing, the right end of the spatial coupler 13 is sphere-jointed to the upper end of the oscillating rod 14 of the bottom mold through a joint bearing, the lower end of the crank 15 of the bottom mold is fixedly connected to the lower end of the oscillating rod 14 of the bottom mold, the lower end of the oscillating rod 14 of the bottom mold is pin-jointed to the bottom mold holder 8, that is, after the lower end of the oscillating rod 14 of the bottom mold is fixedly connected with the lower end of the crank 15 of the bottom mold (the oscillating rod 14 of the bottom mold and the crank 15 of the bottom mold are fixed to each other at an angle between 0° and 90° to form a whole), the whole is pin-jointed to the bottom mold holder 8. The upper end of the crank 15 of the bottom mold is pin-jointed to the lower end of the pull rod 16 of the bottom mold, and the upper end of the pull rod 16 of the bottom mold is pin-jointed to the bottom mold 5. The oscillating rod 14 of the bottom mold and the pull rod 16 of the bottom mold are located in the same vertical plane, and their movements are also located in the vertical plane.

The linkage mechanism formed by the roller arm 10 of the opening and closing mold or the left mold base 1 or the right mold base 2, the auxiliary rotating arm 12 fixedly connected to one of them, the mold base holder 7 and the bottom mold holder 8 fixedly connected thereto, the spatial coupler 13, and the oscillating rod 14 of the bottom mold is a spatial four-bar linkage mechanism; in the spatial four-bar linkage mechanism, the movement plane of the roller arm 10 of the opening and closing mold or the left mold base 1 or the right mold base 2, the auxiliary rotating arm 12 fixedly connected to one of them and the movement plane of the oscillating rod 14 of the bottom mold are perpendicular to each other; the movement plane of the roller arm 10 of the opening and closing mold or the left mold base 1 or the right mold base 2, the auxiliary rotating arm 12 fixedly connected to one of them is a horizontal plane, and the movement plane of the oscillating rod 14 of the bottom mold is a vertical plane;

In this embodiment, the spatial four-bar linkage mechanism is a linkage mechanism formed by the roller arm 10 of the opening and closing mold and the auxiliary rotating arm 12 fixedly connected thereto, the mold base holder 7 and the bottom mold holder 8 fixedly connected thereto, the spatial coupler 13, and the oscillating rod 14 of the bottom mold; the movement plane of the roller arm 10 of the opening and closing mold and the auxiliary rotating arm 12 fixedly connected thereto and the movement plane of the oscillating rod 14 of the bottom mold are perpendicular to each other;

The linkage mechanism formed by the crank 15 of the bottom mold, the pull rod 16 of the bottom mold, the bottom mold 5, and the bottom mold holder 8 and the guide rail 6 of the bottom mold fixedly connected thereto is a planar crank-slider mechanism;

The series connection of the above-mentioned spatial four-bar linkage mechanism and the above-mentioned planar crank-slider mechanism constitutes a series combined connecting-rod type of bottom mold elevator mechanism.

In this embodiment, the linkage mechanism formed by the left mold base 1, the left coupler 18 of the opening and closing mold, the oscillating arm 3 of the opening and closing mold, the roller arm 10 of the opening and closing mold fixedly connected to the oscillating shaft 11 of the opening and closing mold, and the mold base holder 7 is a first pin-jointed four-bar linkage mechanism; and in this first pin-jointed four-bar linkage mechanism, the oscillating arm 3 of the opening and closing mold and the roller arm 10 of the opening and closing mold are regarded as a whole. The linkage mechanism formed by the right mold base 2, the right coupler 4 of the opening and closing mold, the oscillating arm 3 of the opening and closing mold, the roller arm 10 of the opening and closing mold fixedly connected to the oscillating shaft 11 of the opening and closing mold, and the mold base holder 7 is a second pin-jointed four-bar linkage mechanism; and in this second pin-jointed four-bar linkage mechanism, the oscillating arm 3 of the opening and closing mold and the roller arm 10 of the opening and closing mold are regarded as a whole.

The combination of the above-mentioned series combined connecting-rod type of bottom mold elevator mechanism, the above-mentioned first pin-jointed four-bar linkage mechanism, and the above-mentioned second pin-jointed four-bar linkage mechanism forms a combined linkage mechanism with full-connecting-rod type for synchronous motion between an opening and closing mold and a bottom mold of a bottle blowing machine.

In the second embodiment, the spatial four-bar linkage mechanism is a linkage mechanism formed by the left mold base 1 and the auxiliary rotating arm 12 fixedly connected thereto, the mold base holder 7 and the bottom mold holder 8 fixedly connected thereto, the spatial coupler 13, and the oscillating rod 14 of the bottom mold; the movement plane of the left mold base 1 and the auxiliary rotating arm 12 fixedly connected thereto and the movement plane of the oscillating rod 14 of the bottom mold are perpendicular to each other.

In the third embodiment, the spatial four-bar linkage mechanism is a linkage mechanism formed by the right mold base 2 and the auxiliary rotating arm 12 fixedly connected thereto, the mold base holder 7 and the bottom mold holder 8 fixedly connected thereto, the spatial coupler 13, and the oscillating rod 14 of the bottom mold; the movement plane of the right mold base 2 and the auxiliary rotating arm 12 fixedly connected thereto and the movement plane of the oscillating rod 14 of the bottom mold are perpendicular to each other.

In the fourth embodiment, the left end of the spatial coupler 13 is sphere-jointed to the auxiliary rotating arm 12 through a joint bearing, the right end of the spatial coupler 13 is sphere-jointed to the lower end of the oscillating rod 14 of the bottom mold through a joint bearing, the lower end of the crank 15 of the bottom mold is fixedly connected to the upper end of the oscillating rod 14 of the bottom mold, the upper end of the oscillating rod 14 of the bottom mold is pin-jointed to the bottom mold holder 8, that is, after the upper end of the oscillating rod 14 of the bottom mold is fixedly connected with the lower end of the crank 15 of the bottom mold (the oscillating rod 14 of the bottom mold and the crank 15 of the bottom mold are fixed to each other at an angle between 90° and 180° to form a whole), the whole is pin-jointed to the bottom mold holder 8. The upper end of the crank 15 of the bottom mold is pin-jointed to the lower end of the pull rod 16 of the bottom mold, and the upper end of the pull rod 16 of the bottom mold is pin-jointed to the bottom mold 5. The oscillating rod 14 of the bottom mold and the pull rod 16 of the bottom mold are located in the same vertical plane, and their movements are also located in the vertical plane.

In the early opening stage of the molds, the angle α between the oscillating rod 14 of the bottom mold and the spatial coupler 13 is an acute angle, and the angle β between the auxiliary rotating arm 12 and the spatial coupler 13 is an obtuse angle; in the later opening stage of the molds, the angle α between the oscillating rod 14 of the bottom mold and the spatial coupler 13 becomes an obtuse angle, and the angle β between the auxiliary rotating arm 12 and the spatial coupler 13 becomes an acute angle;

In the early closing stage of the molds, the angle α between the oscillating rod 14 of the bottom mold and the spatial coupler 13 is an obtuse angle, and the angle β between the auxiliary rotating arm 12 and the spatial coupler 13 is an acute angle; in the later closing stage of the molds, the angle α between the oscillating rod 14 of the bottom mold and the spatial coupler 13 becomes an acute angle, and the angle β between the auxiliary rotating arm 12 and the spatial coupler 13 becomes an obtuse angle;

When the bottom mold 5 is located at the starting point of the upper end, the crank 15 of the bottom mold and the pull rod 16 of the bottom mold form an approximate linear form with an angle between 170° - 180°.

Thought this configuration, the series combined connecting-rod type of bottom mold elevator mechanism has a high sensitivity state and a low sensitivity state:
In the early opening stage of the molds and the later closing stage of the molds mentioned above, α is an acute angle and β is an obtuse angle, and the series combined connecting-rod type of bottom mold elevator mechanism is in the low sensitivity state; due to that the series combined connecting-rod type of bottom mold elevator mechanism is in the low sensitivity state, when the roller arm 10 of the opening and closing mold oscillates, the bottom mold 5 has a small displacement in the vertical direction; therefore, in the early opening stage of the molds or the later closing stage of the molds, before the wedge-shaped snap ring is separated from the wedge-shaped ring groove or after it enters the wedge-shaped ring groove, the displacement produced by the bottom mold 5 is smaller than the gap between the wedge-shaped snap ring and the wedge-shaped ring groove;

In the middle opening stage of the molds and the middle closing stage of the molds mentioned above, α and β are close to 90°, and the series combined connecting-rod type of bottom mold elevator mechanism is in the high sensitivity state; due to that the series combined connecting-rod type of bottom mold elevator mechanism is in the high sensitivity state, when the roller arm 10 of the opening and closing mold oscillates, the bottom mold 5 has a large displacement in the vertical direction, to achieve the rapid falling and rapid rising of the bottom mold 5. By controlling the angles of α and β, the bottom mold 5 can form an approximate dwell in the early opening stage of the molds and the later closing stage of the molds, avoiding collision and damage between the left mold base 1 and the right mold base 2.

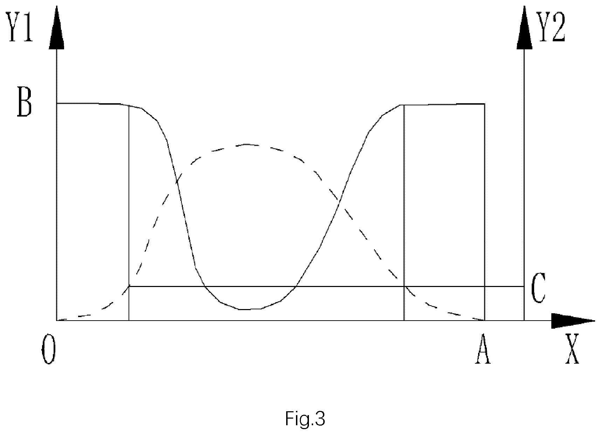

Refer to Figure 3, the X axis represents the rotation angle of the bottle blowing machine, the Y1 axis represents the vertical displacement of the bottom mold 5, the solid line is the vertical displacement curve of the bottom mold 5, and the Y2 axis represents the opening and closing angle of left mold base 1 and the right mold base 2, the dotted line is the opening and closing angle curve of the left mold base 1 and the right mold base 2, O is the starting point of mold opening, A is the end point of mold closing, B is the starting point of the upper end of the bottom mold 5, C is the angle between the left mold base 1 and the right mold base 2 when the wedge-shaped snap ring leaves the wedge-shaped ring groove or enters the wedge-shaped ring groove. It can be seen from Figure 3 that in the early opening stage of the molds and the later closing stage of the molds, with the oscillating of the roller arm 10 of the opening and closing mold, the change of the displacement of the bottom mold 5 in the vertical direction is smaller, while in the middle opening stage of the molds and the middle closing stage of the molds, with the oscillating of the roller arm 10 of the opening and closing mold, the bottom mold 5 has a relatively large displacement change in the vertical direction.

In the early opening stage of the molds, the series combined connecting-rod type of bottom mold elevator mechanism is in the low sensitivity state, the roller arm 10 of the opening and closing mold drives the left mold base 1 and the right mold base 2 to gradually open, and before the wedge-shaped ring groove is completely separated from the wedge-shaped snap ring, the series combined connecting-rod type of bottom mold elevator mechanism controls the displacement of the bottom mold 5 to be smaller than the gap between the wedge-shaped snap ring and the wedge-shaped ring groove, to form an approximate dwell for the bottom mold 5;
In the later closing stage of the molds, the series combined connecting-rod type of bottom mold elevator mechanism is in the low sensitivity state, the roller arm 10 of the opening and closing mold drives the left mold base 1 and the right mold base 2 to gradually close, and before the wedge-shaped snap ring enters and is completely aligned with the wedge-shaped ring groove, the series combined connecting-rod type of bottom mold elevator mechanism controls the displacement of the bottom mold 5 to be smaller than the gap between the wedge-shaped snap ring and the wedge-shaped ring groove, to form an approximate dwell for the bottom mold 5;
In the middle opening stage of the molds, the series combined connecting-rod type of bottom mold elevator mechanism is in the high sensitivity state to control the drop of the bottom mold 5 by a larger displacement;
In the middle closing stage of the molds, the series combined connecting-rod type of bottom mold elevator mechanism is in the high sensitivity state to control the rising of the bottom mold 5 by a larger displacement.

During mold opening, the series combined connecting-rod type of bottom mold elevator mechanism controls the movement of the bottom mold 5 and the movement of the bottle taken by a bottle taking mechanism without geometric interference;
During mold closing, the series combined connecting-rod type of bottom mold elevator mechanism controls the movement of the bottom mold 5 and the movement of the preform delivered by a preform delivery mechanism without geometric interference.

The following specifically describes the working process of this embodiment:
During mold opening, the cam of the opening and closing mold drives the roller arm 10 of the opening and closing mold to oscillate forward, driving the opening and closing mold bases (the left mold base 1 and the right mold base 2) to open the mold, and before the wedge-shaped snap ring is separated from the wedge-shaped ring groove, the series combined connecting-rod type of bottom mold elevator mechanism is in the low sensitivity state, and the bottom mold 5 is in the approximate dwell, and after the wedge-shaped snap ring is separated from the wedge-shaped ring groove, the series combined connecting-rod type of bottom mold elevator mechanism will turn into the high sensitivity state, the bottom mold 5 will drop by a large displacement until the mold opening is completed;
During mold closing, the cam of the opening and closing mold drives the roller arm 10 of the opening and closing mold to oscillate in the opposite direction, driving the opening and closing mold bases (the left mold base 1 and the right mold base 2) to close the mold, the series combined connecting-rod type of bottom mold elevator mechanism will turn into the high sensitivity state, and the bottom mold 5 is lifted up by a large displacement, and with the continuous oscillating of the roller arm 10 of the opening and closing mold, the series combined connecting-rod type of bottom mold elevator mechanism turns into the low sensitivity state, and after the wedge-shaped snap ring enters the wedge-shaped ring groove, the bottom mold 5 is in an approximate dwell until the mold closing is completed.

The embodiments described above are only for illustrating the technical concepts and features of the present disclosure, and are intended to make those skilled in the art being able to understand the present disclosure and thereby implement it, and should not be concluded to limit the protective scope of this disclosure. Any equivalent variations or modifications according to the spirit of the present disclosure should be covered by the protective scope of the present disclosure.

## Claims

1. A combined linkage mechanism with full-connecting-rod type for synchronous motion between an opening and closing mold and a bottom mold of a bottle blowing machine, comprising a left mold base (1), a right mold base (2), an oscillating arm (3) of the opening and closing mold, a left coupler (18) of the opening and closing mold, and a right coupler (4) of the opening and closing mold, a bottom mold (5), a guide rail (6) of the bottom mold, a mold base holder (7), a bottom mold holder (8) , a cam roller (9) of the opening and closing mold, a roller arm (10) of the opening and closing mold, an oscillating shaft (11) of the opening and closing mold, an auxiliary rotating arm (12), a spatial coupler (13), an oscillating rod (14) of the bottom mold, a crank (15) of the bottom mold and a pull rod (16) of the bottom mold;
wherein the cam roller (9) of the opening and closing mold is configured to be rotatably arranged on the roller arm (10) of the opening and closing mold around its own axis, and to drive the roller arm (10) of the opening and closing mold to swing under the drive of a cam of the opening and closing mold, the roller arm (10) of the opening and closing mold and the oscillating arm (3) of the opening and closing mold are both fixedly connected to the oscillating shaft (11) of the opening and closing mold that is rotatably arranged on the mold base holder (7) around its own axis, and two ends of the left coupler (18) of the opening and closing mold / right coupler (4) of the opening and closing mold are configured to be respectively connected with the oscillating arm (3) of the opening and closing mold and pin-jointed to the left mold base (1)/ right mold base (2) that could be pin-jointed to and rotated around the mold base holder (7), and to drive the left mold base (1) and the right mold base (2) to make an opening and closing movement when the roller arm (10) of the opening and closing mold oscillates;
wherein the auxiliary rotating arm (12) is configured to be fixedly connected to the rotor arm (10) of the opening and closing mold or the left mold base (1) or the right mold base (2), two ends of the spatial coupler is configured to be respectively hinged to the auxiliary rotating arm (12) and the oscillating rod (14) of the bottom mold through a spherical surface of a joint bearing fixedly connected thereto, the bottom mold holder (8) is configured to be fixed on the mold base holder (7), the oscillating rod (14) of the bottom mold is configured to be rotatable around an axis on the bottom mold holder (8), one end of the crank (15) of the bottom mold is configured to be fixedly connected to the oscillating rod (14) of the bottom mold and the other end being pin-jointed to the pull rod (16) of the bottom mold, the pull rod (16) of the bottom mold is configured to be pin jointed to the bottom mold, and the bottom mold is configured to be slidable on the guide rail (6) of the bottom mold fixedly connected to the bottom mold holder (8), and to drive the bottom mold to make an up-and-down motion when the roller arm (10) of the opening and closing mold oscillates;
being **characterized in that**, a linkage mechanism formed by the roller arm (10) of the opening and closing mold or the left mold base (1) or the right mold base (2) and the auxiliary rotating arm (12) fixedly connected thereto, the mold base holder (7) and the bottom mold holder (8) fixedly connected thereto, the spatial coupler (13), and the oscillating rod (14) of the bottom mold is a spatial four-bar linkage mechanism; in the spatial four-bar linkage mechanism, a movement plane of the roller arm (10) of the opening and closing mold or the left mold base or the right mold base (2) and the auxiliary rotating arm (12) fixedly connected thereto and a movement plane of the oscillating rod (14) of the bottom mold are perpendicular to each other;
a linkage mechanism formed by the crank (15) of the bottom mold, the pull rod of the bottom mold, the bottom mold (5), the bottom mold holder (8) and the guide rail (6) of the bottom mold fixedly connected thereto is a planar crank-slider mechanism;
the series connection of the spatial four-bar linkage mechanism and the planar crank-slider mechanism form a series combined connecting-rod type of bottom mold elevator mechanism;
a linkage mechanism formed by the left mold base (1), the left coupler (18) of the opening and closing mold, the oscillating arm (3) of the opening and closing mold and the roller arm (10) of the opening and closing mold fixedly connected to the oscillating shaft (11) of the opening and closing mold, and the mold base holder (7) is a first pin-jointed four-bar linkage mechanism;
a linkage mechanism formed by the right mold base (2), the right coupler (4) of the opening and closing mold, the oscillating arm (3) of the opening and closing mold and the roller arm (10) of the opening and closing mold fixedly connected to the oscillating shaft (11) of the opening and closing mold, and the mold base holder (7) is a second pin-jointed four-bar linkage mechanism;
a combination of the series combined connecting-rod type of bottom mold elevator mechanism, the first pin-jointed four-bar linkage mechanism, and the second pin-jointed four-bar linkage mechanism forms a combined linkage mechanism with full-connecting-rod type for synchronous motion between the opening and closing mold and the bottom mold of the bottle blowing machine.

2. The combined linkage mechanism with full-connecting-rod type for synchronous motion between an opening and closing mold and a bottom mold of a bottle blowing machine according to claim 1, is **characterized in that**,
in an early opening stage of the molds, the angle between the oscillating rod (14) of the bottom mold and the spatial coupler (13) is an acute angle, and the angle between the auxiliary rotating arm (12) and the spatial coupler (13) is an obtuse angle; in a later opening stage of the molds, the angle between the oscillating rod (14) of the bottom mold and the spatial coupler (13) becomes an obtuse angle, and the angle between the auxiliary rotating arm (12) and the spatial coupler (13) becomes an acute angle;
in an early closing stage of the molds, the angle between the oscillating rod (14) of the bottom mold and the spatial coupler (13) is an obtuse angle, and the angle between the auxiliary rotating arm (12) and the spatial coupler (13) is an acute angle; in a later closing stage of the molds, the angle between the oscillating rod (14) of the bottom mold and the spatial coupler (13) becomes an acute angle, and the angle between the auxiliary rotating arm (12) and the spatial coupler (13) becomes an obtuse angle;
when the bottom mold is located at the starting point of an upper end, the crank (15) of the bottom mold and the pull rod (16) of the bottom mold form an approximate linear form with an angle between 170° - 180°.

3. The combined linkage mechanism with full-connecting-rod type for synchronous motion between an opening and closing mold and a bottom mold of a bottle blowing machine according to claim 1 or 2, is **characterized in that**, in the bottom mold and the left mold base (1)/right mold base (2), one is machined with a wedge-shaped ring groove, and the other is machined with a wedge-shaped snap ring for clamping into the wedge-shaped ring groove;
the series combined connecting-rod type of bottom mold elevator mechanism has a high sensitivity state and a low sensitivity state;
in the early opening stage of the molds, the series combined connecting-rod type of bottom mold elevator mechanism is in the low sensitivity state, the roller arm (10) of the opening and closing mold drives the left mold base (1) and the right mold base (2) to gradually open, and before the wedge-shaped ring groove is completely separated from the wedge-shaped snap ring, the series combined connecting-rod type of bottom mold elevator mechanism controls the displacement of the bottom mold to be smaller than the gap between the wedge-shaped snap ring and the wedge-shaped ring groove, to form an approximate dwell for the bottom mold;
in the later closing stage of the molds, the series combined connecting-rod type of bottom mold elevator mechanism is in the low sensitivity state, the roller arm (10) of the opening and closing mold drives the left mold base (1) and the right mold base (2) to gradually close, until the wedge-shaped snap ring enters into and is completely aligned with the wedge-shaped ring groove, and the series combined connecting-rod type of bottom mold elevator mechanism controls the displacement of the bottom mold to be smaller than the gap between the wedge-shaped snap ring and the wedge-shaped ring groove, to form an approximate dwell for the bottom mold;
in a middle opening stage of the molds, the series combined connecting-rod type of bottom mold elevator mechanism is in the high sensitivity state to control the drop of the bottom mold by a larger displacement;
in the middle closing stage of the molds, the series combined connecting-rod type of bottom mold elevator mechanism is in the high sensitivity state to control the rising of the bottom mold by a larger displacement.

4. The combined linkage mechanism with full-connecting-rod type for synchronous motion between an opening and closing mold and a bottom mold of a bottle blowing machine according to claim 3, is **characterized in that**,
during mold opening, the series combined connecting-rod type of bottom mold elevator mechanism controls the movement of the bottom mold and the movement of a bottle taken by a bottle taking mechanism without geometric interference;
during mold closing, the series combined connecting-rod type of bottom mold elevator mechanism controls the movement of the bottom mold and the movement of a preform delivered by a preform delivery mechanism without geometric interference.

5. The combined linkage mechanism with full-connecting-rod type for synchronous motion between an opening and closing mold and a bottom mold of a bottle blowing machine according to claim 1, is **characterized in that**, the angle of the oscillating rod (14) of the bottom mold and the crank (15) of the bottom mold is α, where 0° ≤ α ≤ 180°.

## Patentansprüche

1. Vollpleuelverbindungsmechanismus zur synchronen Bewegung zwischen einer Öffnungs- und Schließform und einer Bodenform einer Flaschenblasmaschine, umfassend eine linke Formbasis (1), eine rechte Formbasis (2), einen Schwingarm (3) der Öffnungs- und Schließform, eine linke Kupplung (18) der Öffnungs- und Schließform und eine rechte Kupplung (4) der Öffnungs- und Schließform, eine Bodenform (5), eine Führungsschiene (6) der Bodenform, einen Formbasishalter (7), einen Bodenformhalter (8), eine Nockenrolle (9) der Öffnungs- und Schließform, einen Rollenarm (10) der Öffnungs- und Schließform, eine Schwingwelle (11) der Öffnungs- und Schließform, einen Hilfsdreharm (12), eine räumliche Kupplung (13), eine Schwingstange (14) der Bodenform, eine Kurbel (15) der Bodenform und eine Zugstange (16) der Bodenform;
wobei die Nockenrolle (9) der Öffnungs- und Schließform dazu konfiguriert ist, drehbar auf dem Rollenarm (10) der Öffnungs- und Schließform um ihre eigene Achse angeordnet zu sein und den Rollenarm (10) der Öffnungs- und Schließform zum Schwingen unter dem Antrieb eines Nockens der Öffnungs- und Schließform anzutreiben, der Rollenarm (10) der Öffnungs- und Schließform und der Schwingarm (3) der Öffnungs- und Schließform beide fest mit der Schwingwelle (11) der Öffnungs- und Schließform verbunden sind, die drehbar auf dem Formbasishalter (7) um ihre eigene Achse angeordnet ist, und zwei Enden der linken Kupplung (18) der Öffnungs- und Schließform / rechten Kupplung (4) der Öffnungs- und Schließform dazu konfiguriert sind, jeweils mit dem Schwingarm (3) der Öffnungs- und Schließform verbunden und mit der linken Formbasis (1)/rechten Formbasis (2) gelenkig verbunden zu sein, die mit dem Formbasishalter (7) gelenkig verbunden sein und um diesen gedreht werden könnte, und die linke Formbasis (1) und die rechte Formbasis (2) anzutreiben, um eine Öffnungs- und Schließbewegung auszuführen, wenn der Rollenarm (10) der Öffnungs- und Schließform schwingt;
wobei der Hilfsdreharm (12) dazu konfiguriert ist, fest mit dem Rotorarm (10) der Öffnungs- und Schließform oder der linken Formbasis (1) oder der rechten Formbasis (2) verbunden zu sein, zwei Enden der räumlichen Kupplung dazu konfiguriert sind, jeweils drehbar an dem Hilfsdreharm (12) und der Schwingstange (14) der Bodenform durch eine kugelförmige Oberfläche eines fest damit verbundenen Gelenklagers angebracht zu sein, der Bodenformhalter (8) dazu konfiguriert ist, am Formbasishalter (7) befestigt zu sein, die Schwingstange (14) der Bodenform dazu konfiguriert ist, um eine Achse am Bodenformhalter (8) drehbar zu sein, ein Ende der Kurbel (15) der Bodenform dazu konfiguriert ist, fest mit der Schwingstange (14) der Bodenform verbunden zu sein, und wobei das andere Ende mit der Zugstange (16) der Bodenform gelenkig verbunden ist, die Zugstange (16) der Bodenform dazu konfiguriert ist, mit der Bodenform gelenkig verbunden zu sein, und die Bodenform dazu konfiguriert ist, verschiebbar auf der Führungsschiene (6) der fest mit dem Bodenformhalter (8) verbundenen Bodenform zu sein und die Bodenform anzutreiben, um eine Auf- und Abbewegung auszuführen, wenn der Rollenarm (10) der Öffnungs- und Schließform schwingt;
**dadurch gekennzeichnet, dass** ein Verbindungsmechanismus, der von dem Rollenarm (10) der Öffnungs- und Schließform oder der linken Formbasis (1) oder der rechten Formbasis (2) und dem fest damit verbundenen Hilfsdreharm (12), dem Formbasishalter (7) und dem fest damit verbundenen Bodenformhalter (8), der räumlichen Kupplung (13) und der Schwingstange (14) der Bodenform gebildet ist, ein räumliches Gelenkviereck ist; im räumlichen Gelenkviereck, eine Bewegungsebene des Rollenarms (10) der Öffnungs- und Schließform oder der linken Formbasis oder der rechten Formbasis (2) und des fest damit verbundenen Hilfsdreharms (12) und eine Bewegungsebene der Schwingstange (14) der Bodenform senkrecht zueinander sind;
ein Verbindungsmechanismus, der von der Kurbel (15) der Bodenform, der Zugstange der Bodenform, der Bodenform (5), dem Bodenformhalter (8) und der Führungsschiene (6) der fest damit verbundenen Bodenform gebildet ist, ein planarer Schubkurbelmechanismus ist;
die serielle Verbindung des räumlichen Gelenkvierecks und des planaren Schubkurbelmechanismus einen seriellen Pleuel-Bodenformhebemechanismus bildet;
ein Verbindungsmechanismus, der von der linken Formbasis (1), der linken Kupplung (18) der Öffnungs- und Schließform, dem Schwingarm (3) der Öffnungs- und Schließform und dem Rollenarm (10) der Öffnungs- und Schließform, der fest mit der Schwingwelle (11) der Öffnungs- und Schließform verbunden ist, und dem Formbasishalter (7) gebildet ist, ein erstes gelenkig verbundenes Gelenkviereck ist;
ein Verbindungsmechanismus, der von der rechten Formbasis (2), der rechten Kupplung (4) der Öffnungs- und Schließform, dem Schwingarm (3) der Öffnungs- und Schließform und dem Rollenarm (10) der Öffnungs- und Schließform, der fest mit der Schwingwelle (11) der Öffnungs- und Schließform verbunden ist, und dem Formbasishalter (7) gebildet ist, ein zweites gelenkig verbundenes Gelenkviereck ist;
eine Kombination aus dem seriellen Pleuel-Bodenformhebemechanismus, dem ersten gelenkig verbundenen Gelenkviereck und dem zweiten gelenkig verbundenen Gelenkviereck einen Vollpleuelverbindungsmechanismus zur synchronen Bewegung zwischen der Öffnungs- und Schließform und der Bodenform der Flaschenblasmaschine bildet.

2. Vollpleuelverbindungsmechanismus zur synchronen Bewegung zwischen einer Öffnungs- und Schließform und einer Bodenform einer Flaschenblasmaschine nach Anspruch 1, **dadurch gekennzeichnet, dass**,
in einem frühen Öffnungsstadium der Formen, der Winkel zwischen der Schwingstange (14) der Bodenform und der räumlichen Kupplung (13) ein spitzer Winkel ist und der Winkel zwischen dem Hilfsdreharm (12) und der räumlichen Kupplung (13) ein stumpfer Winkel ist; in einem späteren Öffnungsstadium der Formen, der Winkel zwischen der Schwingstange (14) der Bodenform und der räumlichen Kupplung (13) ein stumpfer Winkel wird und der Winkel zwischen dem Hilfsdreharm (12) und der räumlichen Kupplung (13) ein spitzer Winkel wird;
in einem frühen Schließstadium der Formen, der Winkel zwischen der Schwingstange (14) der Bodenform und der räumlichen Kupplung (13) ein stumpfer Winkel ist und der Winkel zwischen dem Hilfsdreharm (12) und der räumlichen Kupplung (13) ein spitzer Winkel ist; in einem späteren Schließstadium der Formen, der Winkel zwischen der Schwingstange (14) der Bodenform und der räumlichen Kupplung (13) ein spitzer Winkel wird und der Winkel zwischen dem Hilfsdreharm (12) und der räumlichen Kupplung (13) ein stumpfer Winkel wird;
wenn die Bodenform am Ausgangspunkt eines oberen Endes befindlich ist, die Kurbel (15) der Bodenform und die Zugstange (16) der Bodenform eine ungefähre lineare Form mit einem Winkel zwischen 170 ° - 180 ° bilden.

3. Vollpleuelverbindungsmechanismus zur synchronen Bewegung zwischen einer Öffnungs- und Schließform und einer Bodenform einer Flaschenblasmaschine nach Anspruch 1 oder 2, **dadurch gekennzeichnet, dass**, in der Bodenform und der linken Formbasis (1)/rechten Formbasis (2), eine mit einer keilförmigen Ringnut bearbeitet ist und die andere mit einem keilförmigen Sprengring zum Einspannen in die keilförmige Ringnut bearbeitet ist;
der serielle Pleuel-Bodenformhebemechanismus einen hochempfindlichen Zustand und einen geringempfindlichen Zustand aufweist;
im frühen Öffnungsstadium der Formen, der serielle Pleuel-Bodenformhebemechanismus im geringempfindlichen Zustand ist, der Rollenarm (10) der Öffnungs- und Schließform die linke Formbasis (1) und die rechte Formbasis (2) zum allmählichen Öffnen antreibt und, bevor die keilförmige Ringnut vollständig von dem keilförmigen Sprengring getrennt ist, der serielle Pleuel-Bodenformhebemechanismus die Verschiebung der Bodenform steuert, so dass sie kleiner als der Spalt zwischen dem keilförmigen Sprengring und der keilförmigen Ringnut ist, um eine angenäherte Rast für die Bodenform zu bilden;
im späteren Schließstadium der Formen, der serielle Pleuel-Bodenformhebemechanismus im geringempfindlichen Zustand ist, der Rollenarm (10) der Öffnungs- und Schließform die linke Formbasis (1) und die rechte Formbasis (2) zum allmählichen Schließen antreibt, bis der keilförmige Sprengring in die keilförmige Ringnut eintritt und vollständig mit dieser ausgerichtet ist, und der serielle Pleuel-Bodenformhebemechanismus die Verschiebung der Bodenform steuert, so dass sie kleiner als der Spalt zwischen dem keilförmigen Sprengring und der keilförmigen Ringnut ist, um eine angenäherte Rast für die Bodenform zu bilden;
in einem mittleren Öffnungsstadium der Formen, der serielle Pleuel-Bodenformhebemechanismus im hochempfindlichen Zustand ist, um das Herablassen der Bodenform um eine größere Verschiebung zu steuern;
im mittleren Schließstadium der Formen, der serielle Pleuel-Bodenformhebemechanismus im hochempfindlichen Zustand ist, um das Ansteigen der Bodenform um eine größere Verschiebung zu steuern.

4. Vollpleuelverbindungsmechanismus zur synchronen Bewegung zwischen einer Öffnungs- und Schließform und einer Bodenform einer Flaschenblasmaschine nach Anspruch 3, **dadurch gekennzeichnet, dass**,
während des Formöffnens, der serielle Pleuel-Bodenformhebemechanismus die Bewegung der Bodenform und die Bewegung einer Flasche, die von einem Flaschenaufnahmemechanismus aufgenommen wird, ohne geometrische Interferenz steuert;
während des Formschließens, der serielle Pleuel-Bodenformhebemechanismus die Bewegung der Bodenform und die Bewegung eines Vorformlings, der von einem Vorformling-Zuführmechanismus zugeführt wird, ohne geometrische Interferenz steuert.

5. Vollpleuelverbindungsmechanismus zur synchronen Bewegung zwischen einer Öffnungs- und Schließform und einer Bodenform einer Flaschenblasmaschine nach Anspruch 1, **dadurch gekennzeichnet, dass** der Winkel der Schwingstange (14) der Bodenform und der Kurbel (15) der Bodenform α ist, wobei 0 ° ≤ α ≤ 180°.

## Revendications

1. Mécanisme de liaison combiné du type à tige de connexion complète pour un mouvement synchrone entre un moule s'ouvrant et se fermant et un moule de fond d'une machine à souffler les bouteilles, comprenant une base gauche de moule (1), une base droite de moule (2), un bras oscillant (3) du moule s'ouvrant et se fermant, un coupleur gauche (18) du moule s'ouvrant et se fermant et un coupleur droit (4) du moule s'ouvrant et se fermant, un moule de fond (5), un rail de guidage ( 6) du moule de fond, un porte-base de moule (7), un porte-moule de fond (8), un rouleau de came (9) du moule s'ouvrant et se fermant, un bras du rouleau (10) du moule s'ouvrant et se fermant, un arbre oscillant (11) du moule s'ouvrant et se fermant, un bras rotatif auxiliaire (12), un coupleur spatial (13), une tige oscillante (14) du moule de fond, une manivelle (15) du moule de fond et une tige de traction (16) du moule de fond ;
Dans lequel le rouleau de came (9) du moule s'ouvrant et se fermant est configuré pour être disposé de manière rotative sur le bras du rouleau (10) du moule s'ouvrant et se fermant autour de son propre axe, et pour entraîner le bras du rouleau (10) du moule s'ouvrant et se fermant à osciller sous l'entrainement d'une came du moule s'ouvrant et se fermant, le bras du rouleau (10) du moule s'ouvrant et se fermant et le bras oscillant (3) du moule s'ouvrant et se fermant sont tous deux reliés de manière fixe à l'arbre oscillant (11) du moule s'ouvrant et se fermant qui est disposé de manière rotative sur le porte-base du moule (7) autour de son propre axe, et les deux extrémités du coupleur gauche (18) du moule s'ouvrant et se fermant / coupleur droit (4) du moule s'ouvrant et se fermant sont configurées pour être respectivement reliées au bras oscillant (3) du moule s'ouvrant et se fermant et articulées par goupille à la base gauche du moule (1 )/à la base droite du moule (2) qui peuvent être articulées par goupille et tourner autour du support de base du moule (7), et pour entraîner la base gauche du moule (1) et la base droite du moule (2) pour effectuer un mouvement d'ouverture et de fermeture lorsque le rouleau du bras (10) du moule s'ouvrant et se fermant oscille;
Dans lequel le bras rotatif auxiliaire (12) est configuré pour être relié de manière fixe au bras du rouleau (10) du moule s'ouvrant et se fermant ou à la base gauche du moule (1) ou à la base droite du moule (2), deux extrémités du coupleur spatial sont configurées pour être articulées au bras rotatif auxiliaire (12) et à la tige oscillante (14) du moule de fond par l'intermédiaire d'une surface sphérique d'un palier d'articulation qui lui est relié de manière fixe, le support de moule de fond (8) est configuré pour être fixé sur le support de base du moule (7), la tige oscillante (14) du moule de fond est configurée pour pouvoir tourner autour d'un axe sur le support du moule de fond (8), une extrémité de la manivelle (15) du moule de fond est configurée pour être reliée de manière fixe à la tige oscillante (14) du moule de fond et l'autre extrémité étant articulée par goupille à la tige de traction (16) du moule de fond, la tige de traction (16) du moule de fond est configurée pour être articulée par goupille au moule de fond, et le moule de fond est configuré pour pouvoir coulisser sur le rail de guidage ( 6) du moule de fond relié de manière fixe au support du moule de fond (8), et pour entraîner le moule de fond à effectuer un mouvement de haut en bas lorsque le bras du rouleau (10) du moule s'ouvrant et se fermant oscille ;
Etant **caractérisé par le fait qu'**un mécanisme de liaison formé par le bras du rouleau (10) du moule s'ouvrant et se fermant ou de la base gauche du moule (1) ou de la base droite du moule (2) et le bras rotatif auxiliaire (12) qui lui est relié de manière fixe, le porte-base du moule (7) et le porte-moule de fond (8) qui lui est relié de manière fixe, le coupleur spatial (13), et la tige oscillante (14) du moule de fond est un mécanisme de liaison spatiale à quatre barres ; dans le mécanisme de liaison spatiale à quatre barres, un plan de mouvement du bras du rouleau (10) du moule s'ouvrant et se fermant ou de la base gauche du moule ou de la base droite du moule (2) et du bras rotatif auxiliaire (12) qui lui est fixé et un plan de mouvement de la tige oscillante (14) du moule de fond sont perpendiculaires l'un à l'autre ;
Un mécanisme de liaison formé par la manivelle (15) du moule de fond, la tige de traction du moule de fond, le moule de fond (5), le support du moule de fond (8) et le rail de guidage (6) du moule de fond qui est connecté de manière fixe à celui-ci est un mécanisme plan à manivelle et à glissière ;
La connexion en série du mécanisme de liaison spatiale à quatre barres et du mécanisme plan à manivelle et à glissière forment un mécanisme d'élévateur de fond de moule du type à tige de connexion combiné en série ;
Un mécanisme de liaison formé par la base gauche du moule (1), le coupleur gauche (18) du moule s'ouvrant et se fermant, le bras oscillant (3) du moule s'ouvrant et se fermant et le bras du rouleau (10) du moule s'ouvrant et se fermant, reliés de façon fixe à l'arbre oscillant (11) du moule s'ouvrant et se fermant, et le porte-base du moule (7) est un premier mécanisme de liaison à quatre barres articulées par goupille ;
Un mécanisme de liaison formé par la base droite du moule (2), le coupleur droit (4) du moule s'ouvrant et se fermant, le bras oscillant (3) du moule s'ouvrant et se fermant et le bras à du rouleau (10) du moule s'ouvrant et se fermant, reliés de façon fixe à l'arbre oscillant (11) du moule s'ouvrant et se fermant, et le porte-base du moule (7) est un second mécanisme de liaison à quatre barres articulées par goupille ;
Une combinaison du mécanisme d'élévation du fond de moule du type à tige de connexion combinées en série, le premier mécanisme de liaison à quatre barres articulées par goupille et le second mécanisme de liaison à quatre barres articulées par goupille forment un mécanisme de liaison combiné du type à tige de connexion complète pour un mouvement synchrone entre le moule s'ouvrant et se fermant et le moule de fond de la machine à souffler les bouteilles.

2. Le mécanisme de liaison combiné du type à tige de connexion complète pour un mouvement synchrone entre un moule s'ouvrant et se fermant et un moule de fond d'une machine à souffler les bouteilles selon la revendication 1, est **caractérisé en ce que**,
Dans une première phase d'ouverture des moules, l'angle entre la tige oscillante (14) du moule de fond et le coupleur spatial (13) est un angle aigu, et l'angle entre le bras rotatif auxiliaire (12) et le coupleur spatial (13) est un angle obtus ; dans une phase ultérieure d'ouverture des moules, l'angle entre la tige oscillante (14) du moule de fond et le coupleur spatial (13) devient un angle obtus, et l'angle entre le bras rotatif auxiliaire (12) et le coupleur spatial (13) devient un angle aigu ;
Dans une première phase de fermeture des moules, l'angle entre la tige oscillante (14) du moule de fond et le coupleur spatial (13) est un angle obtus, et l'angle entre le bras rotatif auxiliaire (12) et le coupleur spatial (13) est un angle aigu ; dans une phase ultérieure de fermeture des moules, l'angle entre la tige oscillante (14) du moule de fond et le coupleur spatial (13) devient un angle aigu, et l'angle entre le bras rotatif auxiliaire (12) et le coupleur spatial (13) devient un angle obtus ;
Lorsque le moule de fond est situé au point de départ d'une extrémité supérieure, la manivelle (15) du moule de fond et la tige de traction (16) du moule de fond forment une forme linéaire approximative avec un angle compris entre 170° et 180°.

3. Le mécanisme de liaison combiné du type à tige de connexion complète pour un mouvement synchrone entre un moule d'ouverture et de fermeture et un moule de fond d'une machine à souffler les bouteilles selon la revendication 1 ou 2, est **caractérisé en ce que**, dans le moule de fond et la base gauche du moule (1 )/base droite du moule (2), l'un est usiné avec une rainure annulaire en forme de coin, et l'autre est usinée avec un anneau d'arrêt en forme de coin pour le serrage dans la rainure annulaire en forme de coin ;
Le mécanisme d'élévateur de moule de fond du type à tige de connexion combiné en série du présente un état de sensibilité élevée et un état de sensibilité faible ;
Au début de la phase d'ouverture des moules, le mécanisme d'élévateur de moule de fond du type à tige de connexion combiné en série est à l'état de faible sensibilité, le bras à rouleaux (10) du moule s'ouvrant et se fermant entraîne la base gauche de moule (1) et la base droite de moule (2) à s'ouvrir progressivement, et avant que la rainure annulaire en forme de coin ne se sépare complètement de l'anneau d'arrêt en forme de coin, la mécanisme d'élévateur du moule de fond du type à tige de connexion combiné en série contrôle le déplacement du moule de fond pour qu'il soit plus petit que l'espace entre l'anneau d'arrêt en forme de coin et la rainure annulaire en forme de coin, pour former une butée approximative pour le moule de fond ;
Dans la phase ultérieure de fermeture des moules, le mécanisme élévateur de moule de fond du type à tige de connexion combiné en série est dans l'état de faible sensibilité, le bras de rouleau (10) du moule d'ouverture et de fermeture entraîne la base gauche du moule (1) et la base droite du moule (2) pour se fermer progressivement, jusqu'à ce que l'anneau d'arrêt en forme de coin entre et soit complètement aligné avec la rainure annulaire en forme de coin, et le mécanisme élévateur du moule de fond du type à tige de connexion combinée en série contrôle le déplacement du moule de fond pour qu'il soit plus petit que l'espace entre l'anneau d'arrêt en forme de coin et la rainure annulaire en forme de coin, pour former une butée approximative pour le moule de fond ;
Dans une phase d'ouverture intermédiaire des moules, le mécanisme élévateur de moule de fond du type à tige de connexion combiné en série est dans l'état de haute sensibilité pour contrôler la chute du moule de fond d'un déplacement plus important ;
Dans la phase de fermeture intermédiaire des moules, le mécanisme élévateur de moule de fond du type à tige de connexion combiné en série est dans l'état de haute sensibilité pour contrôler la montée du moule de fond d'un déplacement plus important.

4. Le mécanisme de liaison combiné du type à tige de connexion complète pour un mouvement synchrone entre un moule type à tige de connexion combiné en série et un moule de fond d'une machine de soufflage de bouteilles selon la revendication 3, est **caractérisé en ce que**,
Pendant l'ouverture du moule, le mécanisme élévateur du moule de fond du type à tige de connexion combiné en série contrôle le mouvement du moule de fond et le mouvement d'une bouteille prise par un mécanisme de prise de bouteille sans interférence géométrique ;
Pendant la fermeture du moule, le mécanisme élévateur du moule de fond du type à tige de connexion combiné en série contrôle le mouvement du moule de fond et le mouvement d'une préforme délivrée par un mécanisme de délivrance de préforme sans interférence géométrique.

5. Le mécanisme de liaison combiné du type à tige de connexion complète pour un mouvement synchrone entre un moule s'ouvrant et se fermant et un moule de fond d'une machine de soufflage de bouteilles selon la revendication 1, est **caractérisé en ce que**, l'angle de la tige oscillante (14) du moule de fond et la manivelle (15) du moule de fond soit α où 0° < α <180°.
